# EUROPÄISCHE PATENTANMELDUNG

(11) **EP 3 816 478 A1**
(43) Veröffentlichungstag der Anmeldung: **05.05.2021**
(21) Anmeldenummer: 20205191.8
(22) Anmeldetag: 02.11.2020
(51) Int. Cl.: F16H 25/06

(54) **KOAXIALGETRIEBE MIT AXIAL BEWEGLICHEN ZÄHNEN**

(30) Priorität: 04.11.2019 DE 102019129660
(71) Anmelder: WITTENSTEIN SE, 97999 Igersheim (DE)
(72) Erfinder: Schmidt, Michael, 97234 Reichenberg (DE); Bayer, Thomas, 97999 Igersheim (DE); Schreiber, Heiko, 02692 Doberschau (DE)
(74) Vertreter: Zimmermann & Partner Patentanwälte mbB

(57) **Zusammenfassung**

Koaxialgetriebe (1), mit einer bezüglich einer Drehachse (3) des Koaxialgetriebes (1) axial ausgerichteten Verzahnung (5), einem Zahnträger (7) mit axial ausgerichteten Führungen (9), Zähnen (11), welche in den Führungen (9) zum Eingriff mit der Verzahnung (5) aufgenommen sind, wobei die Zähne (11) in den Führungen (9) mit ihren jeweiligen Längsachsen (13) axial ausgerichtet und in den Führungen (9) axial verschieblich gelagert sind, und einer um die Drehachse (3) rotierbaren Kurvenscheibe (15) zum axialen Antrieb der Zähne (11), wobei zwischen der Kurvenscheibe (15) und den Zähnen (11) eine Mehrzahl an Lagersegmenten (17) zur Lagerung der Zähne (11) angeordnet ist.

## Beschreibung

### Gebiet der Erfindung

Die Erfindung betrifft ein Koaxialgetriebe und ein Verfahren zur Herstellung eines Koaxialgetriebes.

### Stand der Technik

Aus dem Stand der Technik sind Getriebe bekannt, welche Zähne umfassen, die in einem Zahnträger radial verschieblich gelagert sind. Zum Antrieb der Zähne in einer radialen Richtung werden Antriebselemente mit einer Profilierung, wie beispielsweise Kurvenscheiben, verwendet. Die Zähne werden in radialer Richtung bewegt und greifen in eine Verzahnung ein, so dass es zu einer Relativbewegung zwischen dem Zahnträger mit den Zähnen und der Verzahnung kommt. Die Relativbewegung zwischen Verzahnung und Zähnen ist dabei um mindestens eine Größenordnung geringer als die Bewegung des Antriebselementes mit der Profilierung. Auf diese Weise lassen sich hohe Übersetzungen erzielen, ein Beispiel eines solchen Getriebes ist in der DE 10 2007 011 175 A1 veröffentlicht.

Allerdings weisen bisher bekannte Lösungen aus dem Stand der Technik Restriktionen in Bezug auf die Übertragung von Drehmomenten auf oder weisen eine hohe Anzahl an Einzelteilen auf oder erfordern eine aufwendige Montage.

### Offenbarung der Erfindung

Aufgabe der Erfindung ist es, ein Koaxialgetriebe anzugeben, welches gegenüber aus dem Stand der Technik bekannten Koaxialgetrieben verbessert ist, wobei insbesondere eine Übertragung höherer Drehmomente oder ein vereinfachter Aufbau aus einer geringeren Anzahl an Einzelteilen oder eine vereinfachte Montage erreicht werden soll. Weiterhin ist es Aufgabe der Erfindung, ein Verfahren zur Herstellung eines solchen Koaxialgetriebes anzugeben.

Die Aufgabe wird mit einem Koaxialgetriebe nach dem Anspruch 1 und einem Verfahren nach dem nebengeordneten Anspruch gelöst. Vorteilhafte Weiterbildungen und Ausführungsformen ergeben sich aus den Unteransprüchen und aus dieser Beschreibung.

Ein Aspekt der Erfindung betrifft ein Koaxialgetriebe, mit einer bezüglich einer Drehachse des Koaxialgetriebes axial ausgerichteten Verzahnung, einem Zahnträger mit axial ausgerichteten Führungen, Zähnen, welche in den Führungen zum Eingriff mit der Verzahnung aufgenommen sind, wobei die Zähne in den Führungen mit ihren jeweiligen Längsachsen axial ausgerichtet und in den Führungen axial verschieblich gelagert sind, und einer um die Drehachse rotierbaren Kurvenscheibe zum axialen Antrieb der Zähne, wobei zwischen der Kurvenscheibe und den Zähnen eine Mehrzahl an Lagersegmenten zur Lagerung der Zähne angeordnet ist.

Ein weiterer Aspekt der Erfindung betrifft ein Verfahren zur Herstellung eines Koaxialgetriebes nach einer der hierin beschriebenen typischen Ausführungsformen, wobei die Zähne in den Lagersegmenten eingesetzt werden bevor die Zähne in die Führungen eingeschoben werden.

Typischerweise sind hierin Ausdrücke wie "axial", "radial" oder "Umfangsrichtung" bezüglich der Drehachse des Koaxialgetriebes zu verstehen, beispielsweise bezüglich der Drehachse der Kurvenscheibe des Koaxialgetriebes.

Bei typischen Ausführungsformen sind die Führungen des Zahnträgers bezüglich der Drehachse des Koaxialgetriebes axial ausgerichtet. Typischerweise sind die Zähne in den Führungen des Zahnträgers axial verschieblich gelagert. Typischerweise sind die Zähne in dem Zahnträger jeweils in genau einer Richtung verschieblich gelagert, typischerweise in Richtung der Längsachse des Zahnes. Dies kann beispielsweise dadurch erreicht werden, dass der Zahn über eine bestimmte Länge, insbesondere über eine bestimmte Länge entlang der Längsachse des Zahnes, einen gleichbleibenden Querschnitt in Verschieberichtung aufweist. Typischerweise ist die Führung für den Zahn in dem Zahnträger als Schlitz oder Öffnung mit in axialer Richtung gleichbleibendem Querschnitt ausgeführt ist. Insbesondere ist die Führung als Bohrung ausgeführt.

Typische Zahnträger umfassen Führungen mit jeweils einer Zahnbasisöffnung an einer Zahnbasisseite des Zahnträgers und einer Zahnkopföffnung an einer Zahnkopfseite des Zahnträgers. Typischerweise ist die Zahnbasisöffnung in Richtung der Kurvenscheibe ausgerichtet und die Zahnkopföffnung in Richtung der Verzahnung. Dies ermöglicht die Aufnahme der Zähne, so dass die Zähne entlang ihrer jeweiligen Längsachse in der Führung axial bezüglich der Drehachse des Koaxialgetriebes verschieblich gelagert sind. Die Längsachse eines Zahnes verläuft typischerweise von einer Zahnbasis des Zahnes zu einem Zahnkopf des Zahnes. Typischerweise sind die Zähne mit ihrer Zahnbasis auf Lagersegmenten gelagert, welche wiederum auf der Kurvenscheibe gelagert sind. Der Zahnträger ist bei typischen Ausführungsformen kreisförmig oder ringförmig. Typische Führungen für die Zähne in dem Zahnträger sind als Durchgangsöffnungen oder Durchgangsbohrungen ausgebildet. Weitere typische Zahnträger umfassen rechteckige Einfräsungen oder Langlöcher oder Schlitze als Führungen.

Bei typischen Ausführungsformen umfasst das Koaxialgetriebe eine Kurvenscheibe mit einer Profilierung als Antriebselement zum axialen Antrieb der Zähne, insbesondere durch Axialhub der Zähne. Typischerweise ist die Profilierung entlang der Umfangsrichtung der Kurvenscheibe mit mindestens einer Erhebung in axialer Richtung ausgeführt, insbesondere mit mindestens zwei oder mindestens drei Erhebungen. Durch den rotativen Antrieb der Kurvenscheibe mit der Profilierung ist über die Lagersegmente eine Kraft in Richtung der jeweiligen Längsachse der Zähne auf die Zähne ausübbar, so dass diese in axialer Richtung aus den Führungen an der Zahnkopfseite des Zahnträgers herausgedrückt werden.

Typische Koaxialgetriebe umfassen eine axial ausgerichtete Verzahnung. Insbesondere kann die Verzahnung als Verzahnung eines Planrads ausgeführt sein.

Typische Koaxialgetriebe weisen eine Antriebswelle und eine Abtriebswelle auf. Typischerweise sind die Antriebswelle und die Abtriebswelle um die Drehachse des Koaxialgetriebes drehbar gelagert. Typischerweise sind die Antriebswelle oder die Abtriebswelle oder beide als Hohlwellen ausgeführt. Typischerweise ist die Kurvenscheibe an der Antriebswelle vorgesehen. Bei typischen Ausführungsformen ist der Zahnträger an der Abtriebswelle vorgesehen, wobei insbesondere die Verzahnung oder ein Planrad mit der Verzahnung drehfest mit einem Gehäuse des Koaxialgetriebes verbunden ist oder nicht relativ zu dem Gehäuse drehbar ist. Bei weiteren typischen Ausführungsformen ist eine Verzahnung oder ein Planrad mit der Verzahnung an der Abtriebswelle vorgesehen, wobei insbesondere ein Zahnträger drehfest mit einem Gehäuse des Koaxialgetriebes verbunden ist oder nicht relativ zu dem Gehäuse drehbar ist.

Bei typischen Ausführungsformen der erfindungsgemäßen Koaxialgetriebe ist zumindest ein Teil der Zähne biegesteif ausgeführt. Der Begriff "biegesteif" ist dabei typischerweise technisch zu verstehen, das heißt, dass Biegungen der Zähne aufgrund der Steifigkeit des Materials der Zähne derart klein sind, dass sie für die Kinematik des Koaxialgetriebes zumindest im Wesentlichen unbedeutend sind. Biegesteife Zähne umfassen insbesondere Zähne, welche aus einer Metalllegierung, insbesondere Stahl oder einer Titanlegierung, einer Nickellegierung oder anderen Legierungen hergestellt sind. Weiterhin können auch biegesteife Zähne aus Kunststoff vorgesehen werden, insbesondere bei Koaxialgetrieben, bei welchen auch zumindest einer der folgenden Teile ebenfalls aus Kunststoff hergestellt ist: Verzahnung, Zahnträger und Antriebselement. Bei typischen Ausführungsformen sind der Zahnträger und die Zähne aus einer Metalllegierung oder zusätzlich noch die Verzahnung oder weiter zusätzlich das Antriebselement aus einer Metalllegierung hergestellt. Solche Koaxialgetriebe bieten den Vorteil, dass sie äußerst verdrehsteif und hoch belastbar sind. Koaxialgetriebe aus Kunststoff bieten den Vorteil, dass sie ein geringes Gewicht aufweisen. Mit dem Ausdruck "biegesteif" ist insbesondere eine Biegesteifigkeit um eine Querachse des Zahns gemeint. Dies bedeutet insbesondere, dass bei einer Ansicht des Zahns als Balken von einer Zahnbasis zu einem Zahnkopf eine Biegesteifigkeit vorliegt, welche Biegeverformungen zwischen Zahnkopf und Zahnbasis zumindest im Wesentlichen ausschließt. Durch die Biegesteifigkeit wird eine extrem hohe Belastbarkeit und Verdrehsteifigkeit des Koaxialgetriebes erreicht.

Die Verzahnung und die Zähne weisen typischerweise gekrümmte Flanken auf. Beispiele für Krümmungen der Flanken sind eine zylinderförmige Krümmung, eine Krümmung der Flanken entlang einer Helix oder einer Wendelfläche um die Drehachse des Koaxialgetriebes, oder eine Krümmung in Form einer logarithmischen Spirale. Für eine mögliche Ausführungsform einer Krümmung in Form einer logarithmischen Spirale wird auf die DE 10 2007 011 175 A1 verwiesen. Die gekrümmte Oberfläche bietet den Vorteil, dass die in Eingriff stehenden Flanken flächig und nicht lediglich linien- oder punktförmig anliegen. Auf diese Weise wird eine extreme Steifigkeit bei der Kraftübertragung zwischen der Verzahnung und den Zähnen erreicht. Unter "Flanken" sind hierin insbesondere Zahnflanken der Zähne oder Flanken der Verzahnung zu verstehen.

Bei typischen Ausführungsformen weist ein Zahn in einem der Verzahnung zugewandten ersten Endbereich des Zahns einen Zahnkopf mit Zahnflanken auf. Typischerweise umfasst der Zahn in einem der Kurvenscheibe zugewandten zweiten Endbereich des Zahns eine Zahnbasis. Die Zahnbasis weist typischerweise eine Zahnbasisauswölbung auf. Typischerweise ist die Zahnbasisauswölbung eingerichtet zur Lagerung des Zahns in einer Zahnbucht eines Lagersegments.

Bei typischen Ausführungsformen umfasst der Zahn zwischen dem Zahnkopf und der Zahnbasis einen Zahnrumpf. Der Zahnrumpf erstreckt sich entlang der Längsachse des Zahns über eine Rumpflänge. Typischerweise weist der Zahnrumpf über die Rumpflänge abgesehen von Schmierkanälen oder Ähnlichem zumindest im Wesentlichen einen gleichbleibenden Querschnitt auf.

Bei typischen Ausführungsformen ist der Zahn als Rundzahn ausgeführt. Beispielsweise weist der Zahnrumpf eines Zahns einen zumindest im Wesentlichen gleichbleibenden kreisförmigen Querschnitt auf. Typischerweise ist der Zahnrumpf zumindest im Wesentlichen zylinderförmig ausgeführt.

Bei weiteren typischen Ausführungsformen ist ein Zahn als Flachzahn ausgeführt. Flachzähne werden typischerweise in Führungen mit nicht-rundem Querschnitt in dem Zahnträger geführt. Bei typischen Ausführungsformen weist der Zahn eine mindestens doppelt so große Breite, beispielsweise in Radialrichtung des Koaxialgetriebes, wie Dicke, beispielsweise in Umlaufrichtung des Koaxialgetriebes, auf. Weitere Ausführungsformen umfassen runde, kreisrunde oder ovale Zähne oder runde Zähne mit Abflachungen.

Bei typischen Ausführungsformen ist zwischen der Kurvenscheibe und den Zähnen eine Mehrzahl an Lagersegmenten angeordnet. Typischerweise sind die Lagersegmente eingerichtet zur Lagerung der Zähne an der Kurvenscheibe. Bei typischen Ausführungsformen sind die Lagersegmente ringförmig angeordnet. Typischerweise sind die Lagersegmente in Umfangsrichtung zueinander benachbart angeordnet.

Typischerweise ist jeder der Zähne des Koaxialgetriebes jeweils auf einem der Lagersegmente gelagert. Bei weiteren typischen Ausführungsformen ist jeweils mindestens ein Zahn auf einem der Lagersegmente gelagert, insbesondere jeweils mindestens zwei Zähne oder jeweils mindestens drei Zähne.

Bei typischen Ausführungsformen sind mindestens zwei der Lagersegmente miteinander verbunden, insbesondere integral miteinander verbunden. Beispielsweise sind mindestens zwei der Lagersegmente einstückig hergestellt. Insbesondere sind mindestens drei, mindestens vier oder alle Lagersegmente des Koaxialgetriebes miteinander verbunden oder einstückig hergestellt. Typischerweise sind miteinander verbundene Lagersegmente elastisch miteinander verbunden, beispielsweise durch ein Festkörpergelenk, insbesondere biegbar zum Folgen einer Hubbewegung der Kurvenscheibe in axialer Richtung.

Bei typischen Ausführungsformen ist ein Festkörpergelenk, welches zwei Lagersegmente miteinander verbindet, als Sollbruchstelle eingerichtet. Beispielsweise kann nach der Montage des Koaxialgetriebes ein Zusammenhängen der Lagersegmente nicht mehr notwendig sein. Insbesondere können die Lagersegmente nach dem Bruch des Festkörpergelenks an der Sollbruchstelle über ein loses Gelenk, insbesondere formschlüssig miteinander verbunden sein.

Bei typischen Ausführungsformen sind Lagersegmente gelenkig miteinander verbunden, insbesondere fest oder lose. Typischerweise sind die Lagersegmente fest, insbesondere nicht voneinander lösbar, miteinander verbunden. Typischerweise sind die Lagersegmente zueinander bewegbar und insbesondere eingerichtet zum Folgen einer Hubbewegung der Kurvenscheibe in einer axialen Richtung. Bei weiteren typischen Koaxialgetrieben sind die Lagersegmente als einzelne, lose Lagersegmente ausgeführt.

Bei typischen Ausführungsformen weisen die Lagersegmente jeweils eine Zahnbucht zur Aufnahme eines jeweiligen auf dem Lagersegment gelagerten Zahnes auf. Typischerweise weisen die Lagersegmente jeweils eine Zahnbucht auf. Typischerweise weist die Zahnbucht eine Vertiefung in axialer Richtung auf. In der Vertiefung kann ein Zahn des Koaxialgetriebes aufgenommen sein. Beispielsweise kann die Zahnbucht als einseitig offene Schale ausgeführt sein. Typischerweise ist der Rand der Zahnbucht rechteckig oder oval ausgeführt. Dadurch kann beispielsweise eine Schwenkbewegung des Lagersegments gegenüber dem Zahn ermöglicht werden.

Typischerweise umfassen die Lagersegmente Stege, wobei die Stege jeweils ein erstes der Lagersegmente mit einem benachbarten der Lagersegmente verbinden. Insbesondere kann ein Steg an der dem Zahnträger zugewandten Seite der Lagersegmente angeordnet sein oder bezüglich der axialen Breite der Lagersegmente mittig angeordnet sein. Typischerweise weist der Steg eine axiale Dicke auf, welche geringer ist als die axiale Breite eines Lagersegments. Typischerweise ist der Steg verjüngt gegenüber dem Lagersegment ausgebildet. Typischerweise ist der Steg eines Lagersegments als Festkörpergelenk eingerichtet. Insbesondere weist der Steg eine geringere Biegesteifigkeit auf als eine Zahnbucht des Lagersegments. Insbesondere ist der Steg dazu eingerichtet, eine Beweglichkeit der Lagersegmente relativ zueinander bereitzustellen, insbesondere eine Beweglichkeit in axialer Richtung.

Typischerweise sind die Zähne mit den Lagersegmenten jeweils über einen Rastmechanismus verbunden, insbesondere gegen ein Herausfallen aus den Lagersegmenten gesichert. Typischerweise sind ein Zahn und ein Lagersegment beweglich miteinander verbunden. Beispielsweise können der Zahn und das Lagersegment durch Formschluss oder eine Hinterschneidung oder einen Clip miteinander verbunden sein. Miteinander verbundene Lagersegmente und Zähne können insbesondere eine Montage eines typischen Koaxialgetriebes erleichtern oder vereinfachen.

Bei typischen Ausführungsformen weisen die Zähne jeweils mindestens eine Einkerbung auf, insbesondere mindestens zwei Einkerbungen. Typischerweise umfassen die Lagersegmente jeweils mindestens einen Clip, der zum Formschluss oder zum Kraftschluss mit dem Zahn, insbesondere mit der mindestens einen Einkerbung des Zahns, ausgebildet ist. Typischerweise ist die mindestens eine Einkerbung des Zahns in einem Zahnbasisbereich des Zahns ausgeführt. Der Zahnbasisbereich des Zahns steht typischerweise aus einer Führung des Zahnträgers hervor.

Bei typischen Ausführungsformen ist eine Zahnbucht eines Lagersegments innen mit einem ersten Schwenkradius, insbesondere in Umfangsrichtung, ausgerundet. Bei typischen Ausführungsformen weist ein Zahn des Koaxialgetriebes eine Zahnbasisauswölbung an der Zahnbasis des Zahns auf, insbesondere eine Zahnbasisauswölbung mit einem zweiten Schwenkradius. Insbesondere kann die Zahnbasisauswölbung in halbzylindrischer Form mit dem zweiten Schwenkradius ausgeführt sein, wobei eine Zylinderachse der halbzylindrischen Form beispielsweise in einer radialen Richtung bezüglich der Drehachse des Koaxialgetriebes ausgerichtet ist. Typischerweise ist der zweite Schwenkradius zumindest im Wesentlichen gleich dem ersten Schwenkradius. Typischerweise steht der Zahn mit der Zahnbasisauswölbung in der Zahnbucht. Dadurch kann beispielsweise eine Schwenkbewegung des Lagersegments, insbesondere um eine bezüglich der Drehachse des Koaxialgetriebes radiale Richtung, gegenüber dem Zahn ermöglicht werden.

Typischerweise weisen die Lagersegmente eine Gleitlagerfläche zur Gleitlagerung der Lagersegmente auf der Kurvenscheibe auf. Insbesondere weisen die Lagersegmente jeweils eine Gleitlagerfläche auf. Bei typischen Ausführungsformen weisen die Lagersegmente an der der Kurvenscheibe zugewandten Seite der Lagersegmente mindestens eine Schmiernut auf. Typischerweise ist die Schmiernut an der Grenze zweier benachbarter Lagersegmente ausgebildet. Insbesondere kann die Schmiernut durch zwei aneinandergrenzende Lagersegmente und einen Steg räumlich begrenzt sein. Typischerweise erstreckt sich die Schmiernut in radialer Richtung zwischen zwei Lagersegmenten. Die Schmiernut kann beispielsweise die Einbringung eines Schmiermittels in einen Schmierspalt zwischen der Gleitlagerfläche eines Lagersegments und einer Profilierungsgleitfläche der Profilierung erleichtern. Über die Schmiernut kann beispielsweise ein Schmierstoffaustausch zwischen dem Schmierspalt und einem Getriebeinnenraum des Koaxialgetriebes verbessert werden. Insbesondere können die Schmiernut und insbesondere die Gleitlagerfläche für eine hydrodynamische Gleitlagerfunktion optimiert sein.

Typischerweise umfasst ein Lagersegment an der der Kurvenscheibe zugewandten Seite des Lagersegments eine Gleitlagerfläche und eine Nutfläche. Die Profilierung der Kurvenscheibe weist typischerweise eine den Lagersegmenten zugewandte Profilierungsgleitfläche auf, auf welcher die Lagersegmente mit der jeweiligen Gleitlagerfläche aufliegen. Die Gleitlagerfläche ist typischerweise zumindest im Wesentlichen parallel zu der Profilierungsgleitfläche der Profilierung ausgerichtet. Die Nutfläche ist typischerweise in axialer Richtung zu der Profilierungsgleitfläche geneigt. Insbesondere umfasst ein Lagersegment zwei Nutflächen, beispielsweise jeweils eine Nutfläche zu beiden Seiten der Gleitlagerfläche in Umfangsrichtung. Insbesondere flankieren zwei Nutflächen eine Schmiernut. Typischerweise ist der Übergang zwischen der Gleitlagerfläche und der Nutfläche in Umfangsrichtung verrundet, beispielsweise mit einem Radius verrundet.

Bei typischen Ausführungsformen sind die Lagersegmente aus Kunststoff oder aus Metall hergestellt. Typischerweise sind die Lagersegmente durch ein Urformverfahren oder ein Umformverfahren hergestellt. Bei typischen Ausführungsformen sind die Lagersegmente in einem Urformverfahren aus Kunststoff in einem Kunststoff-Spritzgussverfahren, in einem Kokillengießverfahren oder Druckgussverfahren oder durch Metallpulverspritzgießen (Metal Injection Moulding (MIM)-Verfahren) hergestellt. In weiteren typischen Ausführungsformen sind die Lagersegmente in einem Tiefziehverfahren aus Metall hergestellt. Typischerweise sind die Lagersegmente aus Stahl, Bronze oder Aluminium hergestellt, insbesondere mit Beschichtungen.

Bei typischen Ausführungsformen sind die Teile des Koaxialgetriebes aus Kunststoff, Metall oder Kunststoff-Metall-Verbund hergestellt. Typischerweise sind die Teile des Koaxialgetriebes, insbesondere die Verzahnung, der Zahnträger, die Lagersegmente, die Zähne oder die Kurvenscheibe, durch ein Urformverfahren oder ein Umformverfahren hergestellt. In beispielhaften Ausführungsformen eines Koaxialgetriebes können die Teile des Koaxialgetriebes, die Zähne und die Kurvenscheibe ausgenommen, aus Kunststoff oder Kunststoff-Metall-Verbund hergestellt sein, wobei die Zähne und die Kurvenscheibe aus Metall hergestellt sind. In weiteren beispielhaften Ausführungsformen können die Teile eines Koaxialgetriebes, die Lagersegmente ausgenommen, aus Stahl hergestellt sein, wobei die Lagersegmente aus Kunststoff hergestellt sind.

Bei typischen Ausführungsformen weisen die Lagersegmente jeweils eine zumindest im Wesentlichen konstante Wandstärke auf. Insbesondere können die Zahnbuchten oder die Stege, insbesondere die Zahnbuchten und die Stege, eine zumindest im Wesentlichen konstante Wandstärke aufweisen. Beispielsweise können Lagersegmente mit zumindest im Wesentlichen konstanter Wandstärke für eine Herstellung in einem Spritzgussverfahren oder Tiefziehverfahren besonders geeignet sein.

Bei typischen Ausführungsformen sind die Führungen mit den darin angeordneten Zähnen entlang mindestens zweier konzentrischer Ringe angeordnet, insbesondere entlang mindestens zweier konzentrischer Ringe mit unterschiedlichen Ringdurchmessern. Typischerweise verlaufen die mindestens zwei konzentrischen Ringe konzentrisch um die Drehachse des Koaxialgetriebes. Typischerweise sind die Lagersegmente entlang der oder axial versetzt zu den mindestens zwei konzentrischen Ringen angeordnet.

Typischerweise umfassen die Zähne des Koaxialgetriebes erste Zähne, welche entlang eines ersten Rings der mindestens zwei konzentrischen Ringe in Umfangsrichtung angeordnet sind, und zweite Zähne, die entlang eines zweiten Rings der mindestens zwei konzentrischen Ringe angeordnet sind, wobei der erste Ring einen geringeren Ringdurchmesser aufweist als der zweite Ring. Typischerweise weisen die ersten Zähne einen geringeren Zahndurchmesser im Querschnitt zu der Längsachse der Zähne auf als die zweiten Zähne. Typischerweise weisen erste Lagersegmente, welche entlang oder axial versetzt zu dem ersten Ring angeordnet sind, jeweils kleinere Zahnbuchten auf als zweite Lagersegmente, welche entlang oder axial versetzt zu dem zweiten Ring angeordnet sind. Bei weiteren typischen Ausführungsformen weisen die ersten Zähne und die zweiten Zähne den gleichen Zahndurchmesser im Querschnitt zu der Längsachse der Zähne auf. Typischerweise ist die Anzahl der ersten Zähne gleich der Anzahl der zweiten Zähne. Typischerweise ist die Anzahl der ersten Lagersegmente gleich der Anzahl der zweiten Lagersegmente.

Bei typischen Ausführungsformen sind die ersten Lagersegmente relativ zu den zweiten Lagersegmenten beweglich. Insbesondere sind die ersten Lagersegmente durch einen Ringspalt von den zweiten Lagersegmenten getrennt oder gleitend an den zweiten Lagersegmenten angeordnet. Bei weiteren typischen Ausführungsformen sind die ersten Lagersegmente mit den zweiten Lagersegmenten verbunden, insbesondere gelenkig, beispielsweise durch ein Festkörpergelenk, insbesondere durch Stege. Insbesondere können die ersten Lagersegmente und die zweiten Lagersegmente einstückig hergestellt sein.

Typischerweise sind die ersten Zähne in Umfangsrichtung versetzt zu den zweiten Zähnen angeordnet. Typischerweise sind die ersten Zähne jeweils in Umfangsrichtung mittig zwischen jeweils zwei zweiten Zähnen angeordnet. Durch einen Versatz der ersten Zähne zu den zweiten Zähnen können sich insbesondere abweichende Hubbewegungen ergeben. Beispielsweise kann durch einen Versatz eine günstigere Einleitung von Kräften in den Zahnträger oder ein reduzierter Bauraumbedarf oder eine höhere Leistungsdichte erreicht werden. Insbesondere kann durch einen Versatz die Verwendung einer größeren Hohlwelle ermöglicht werden. Bei weiteren typischen Ausführungsformen sind die ersten Zähne und die zweiten Zähne jeweils unter gleichen Winkeln bezüglich der Drehachse des Koaxialgetriebes angeordnet.

Bei weiteren typischen Ausführungsformen sind die Führungen mit den darin angeordneten Zähnen entlang genau eines Rings angeordnet. Typischerweise sind die Lagersegmente entlang des oder axial versetzt zu dem einen Ring angeordnet. Durch eine einreihige Anordnung der Zähne kann insbesondere die Anzahl der Zähne oder die Komplexität des Koaxialgetriebes niedriger gehalten werden. Insbesondere kann eine besonders große Hohlwelle verwendet werden.

Bei typischen Verfahren zur Herstellung eines Koaxialgetriebes werden die Zähne in die Lagersegmente eingesetzt. Typischerweise sind die Lagersegmente miteinander verbunden, insbesondere zu einem kompletten Ring. Typischerweise werden die Zähne in die Lagersegmente eingerastet, beispielsweise über einen Rastmechanismus. Bei typischen Ausführungsformen wird der Zahnträger an die Verzahnung geschoben. Typischerweise werden die Lagersegmente mit den Zähnen in den Zahnträger geschoben. Typischerweise erfolgt während des Schiebens der Lagersegmente mit den Zähnen in den Zahnträger ein Einschieben der Zähne in die Führungen des Zahnträgers. Typischerweise wird die Kurvenscheibe an die Lagersegmente geschoben. Insbesondere werden die Teile des Koaxialgetriebes, insbesondere die Verzahnung, der Zahnträger, die Lagersegmente mit den Zähnen und die Kurvenscheibe, in axialer Richtung aneinandergeschoben oder ineinandergeschoben.

Typische Ausführungsformen des Koaxialgetriebes können gegenüber dem Stand der Technik den Vorteil bieten, dass das Koaxialgetriebe ein höheres Drehmoment übertragen kann. Insbesondere kann eine größere Hohlwelle oder eine größere Lagerung verbaut werden. Ein weiterer Vorteil kann sein, dass das Koaxialgetriebe eine verringerte Anzahl an Einzelteilen aufweist. Insbesondere können die Lagersegmente miteinander verbunden hergestellt werden, beispielsweise als Ring. Typische Koaxialgetriebe können den weiteren Vorteil bieten, dass die Montage des Koaxialgetriebes vereinfacht ist. Insbesondere können alle Hauptbauteile in axialer Richtung aneinander oder ineinander geschoben werden. Insbesondere können Teile des Koaxialgetriebes voll- oder teilautomatisiert montiert oder eingestellt werden. Ein Vorteil kann sein, dass die Zähne beispielsweise über einen Rastmechanismus mit den Lagersegmenten verbunden und als Einheit montiert werden können, insbesondere durch Einschieben in den Zahnträger. Die Montage kann dadurch vereinfacht und Montagezeiten sowie Montagekosten reduziert werden. Ein weiterer Vorteil typischer Koaxialgetriebe kann sein, dass Teile des Koaxialgetriebes, beispielsweise die Lagersegmente oder der Zahnträger, durch kostengünstige Fertigungsverfahren hergestellt werden können. Insbesondere kann ein Vorteil sein, dass die Teile des Koaxialgetriebes zum axialen Entformen geeignet sind.

### Kurze Beschreibung der Zeichnungen

Nachfolgend wird die Erfindung anhand der beiliegenden Zeichnungen näher erläutert, wobei die Figuren zeigen:
- Fig. 1: zeigt eine typische Ausführungsform des Koaxialgetriebes in einer schematischen Schnittansicht;
- Fig. 2: zeigt eine schematische Ansicht einer Mehrzahl an Lagersegmenten eines typischen Koaxialgetriebes;
- Fig. 3: zeigt eine weitere schematische Ansicht einer Mehrzahl an Lagersegmenten;
- Fig. 4: zeigt eine schematische Schnittansicht einer Mehrzahl an Lagersegmenten;
- Fig. 5: zeigt eine schematische Ansicht einer entlang zweier konzentrischer Ringe angeordneten Mehrzahl an Lagersegmenten;
- Fig. 6A-C: zeigen jeweils eine schematische Ansicht eines Zahns einer typischen Ausführungsform; und
- Fig. 7: zeigt schematisch ein typisches Verfahren zur Herstellung eines Koaxialgetriebes.

### Beschreibung von Ausführungsbeispielen

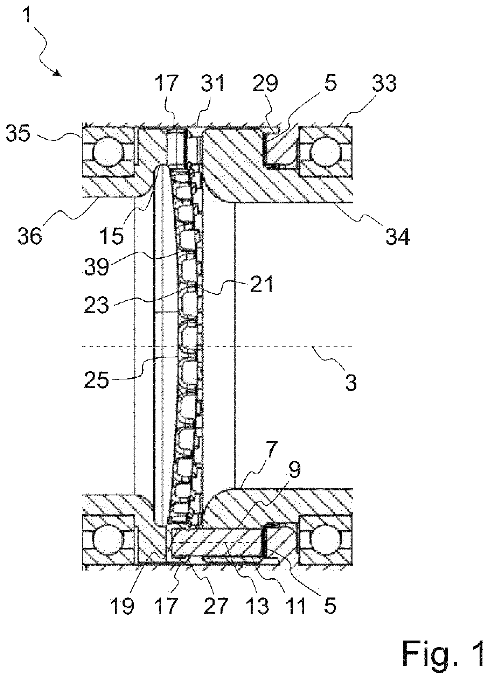

Nachfolgend werden typische Ausführungsformen der Erfindung anhand der Figuren beschrieben, wobei die Erfindung nicht auf die Ausführungsbeispiele beschränkt ist, vielmehr wird der Umfang der Erfindung durch die Ansprüche bestimmt. Bei der Beschreibung der Ausführungsformen werden unter Umständen in verschiedenen Figuren und für verschiedene Ausführungsformen gleiche Bezugszeichen für gleiche oder ähnliche Teile verwendet. Teilweise werden Merkmale, welche bereits im Zusammenhang mit anderen Figuren beschrieben wurden, der Übersichtlichkeit halber nicht nochmals beschrieben. Zur Übersichtlichkeit sind teilweise nicht alle jeweiligen Merkmale mit einem Bezugszeichen versehen, beispielsweise die Lagersegmente (Bezugszeichen 17 in der Figuren 1-5).

In der Fig. 1 ist ein Ausschnitt einer typischen Ausführungsform der Erfindung in einer schematischen Schnittansicht dargestellt. Die Fig. 1 zeigt ein Koaxialgetriebe 1 mit einer bezüglich einer Drehachse 3 des Koaxialgetriebes 1 ausgerichteten Verzahnung 5. Die Verzahnung 5 ist als Verzahnung eines Planrads 29 umlaufend um die Drehachse 3 ausgeführt. Das Planrad 29 ist drehfest mit einem Gehäuse 31 des Koaxialgetriebes 1 verbunden.

Das Koaxialgetriebe 1 umfasst einen Zahnträger 7, welcher an einer Abtriebswelle 34 vorgesehen ist. Die Abtriebswelle 34 ist über ein erstes Lager 33 um die Drehachse 3 drehbar an dem Gehäuse 31 gelagert. Der Zahnträger weist axial ausgerichtete Führungen 9 auf, in welchen jeweils Zähne 11 aufgenommen sind. Die Zähne 11 sind entlang ihrer jeweiligen Längsachsen 13 in den Führungen 9 axial bezüglich der Drehachse 3 verschieblich gelagert.

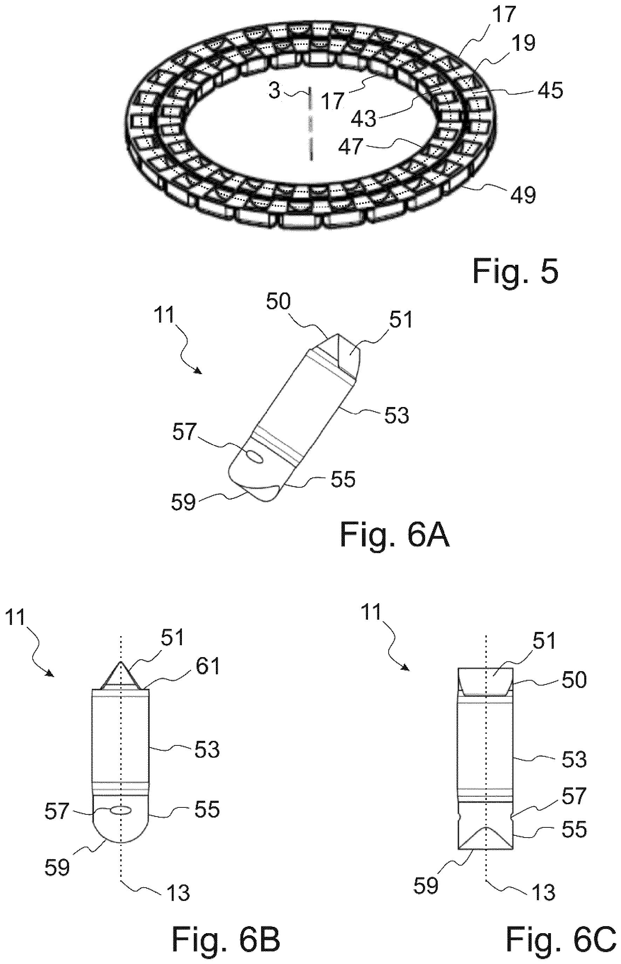

Die Zähne 11 umfassen jeweils einen Zahnkopf, welcher zum Eingriff mit der Verzahnung 5 ausgerichtet ist, und eine Zahnbasis, welche aus der Führung 9 des jeweiligen Zahns 11 hervorsteht und an einem Lagersegment 17 gelagert ist. Ein Zahn 11 umfasst weiterhin einen Zahnrumpf zwischen der Zahnbasis und dem Zahnkopf, wobei der Zahnrumpf zumindest teilweise in der Führung 9 des Zahns 11 aufgenommen ist. Die Zahnbasis des Zahns 11 steht in einer Zahnbucht 19 des Lagersegments 17. Das Lagersegment 17 und der Zahn 11 sind über einen Rastmechanismus miteinander verbunden. In der Fig. 1 ist der Rastmechanismus durch einen Clip 27 des Lagersegments 17 und zwei Einkerbungen (siehe Fig. 6A-C) des Zahns 11 bereitgestellt.

Jedes Lagersegment 17 der Mehrzahl an Lagersegmenten 17 weist eine Zahnbucht 19 auf, welche als Vertiefung in axialer Richtung ausgeführt ist. Die Zahnbuchten 19 sind jeweils in Umfangsrichtung mit einem ersten Schwenkradius ausgerundet. Jeweils zwei Lagersegmente 17 sind durch einen Steg 21 der Lagersegmente 17 miteinander verbunden. Insbesondere verbindet der Steg 21 jeweils eine Zahnbucht 19 eines ersten der Lagersegmente 17 mit der Zahnbucht 19 eines benachbarten der Lagersegmente 17.

Die Lagersegmente 17 sind jeweils über eine Gleitlagerfläche 23 an einer Profilierung 25 einer Kurvenscheibe 15 des Koaxialgetriebes 1 gelagert. Die Kurvenscheibe 15 ist an einer Antriebswelle 36 vorgesehen. Die Antriebswelle 36 ist über ein zweites Lager 35 um die Drehachse 3 drehbar an dem Gehäuse 31 gelagert. Die Profilierung 25 ist um die Drehachse 3 umlaufend ausgeführt und weist in der Fig. 1 eine axiale Erhebung in Richtung der Zähne 11 auf. Die Lagerflächen, insbesondere die Gleitlagerflächen 23 und eine Profilierungsgleitfläche der Profilierung 25, sind mit einem Schmiermittel geschmiert. Die Gleitlagerfläche 23 eines Lagersegments 17 ist an der der Profilierung 25 zugewandten Seite der Zahnbucht 19 des Lagersegments 17 vorgesehen.

Zwischen den Gleitlagerflächen 23 zweier benachbarter Lagersegmente 17 weisen die Lagersegmente 17 eine Schmiernut 39 auf. Die Schmiernut 39 zwischen den Gleitlagerflächen 23 zweier benachbarter Lagersegmente 17 wird durch einen Steg 21 zwischen zwei benachbarten Lagersegmenten 17 überbrückt. Durch die Schmiernut 39 kann beispielsweise die Einbringung von Schmiermittel in einen Schmierspalt zwischen der Gleitlagerfläche 23 und einer Profilierungsgleitfläche der Profilierung 25 verbessert werden.

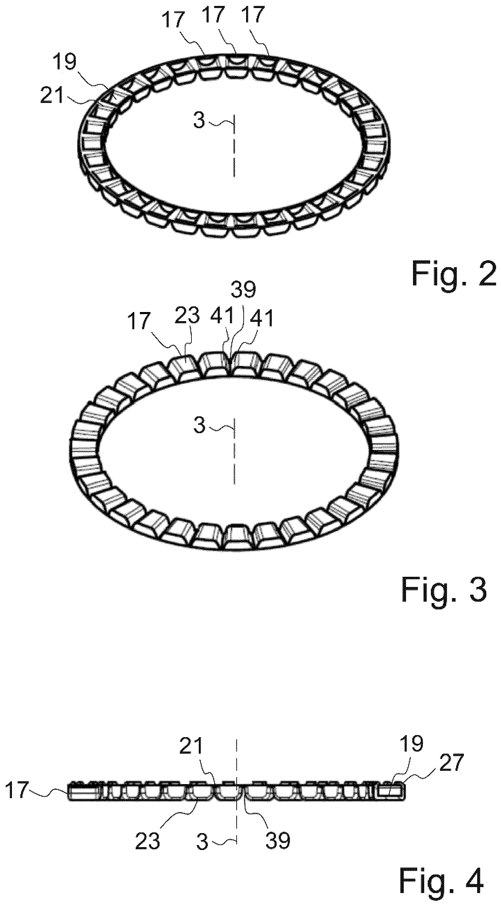

Die Figuren 2 und 3 zeigen Ansichten einer Mehrzahl an Lagersegmenten 17 eines typischen Koaxialgetriebes. Die Lagersegmente 17 sind ringförmig miteinander verbunden. Insbesondere sind die Lagersegmente 17 entlang eines mit der Drehachse 3 des Koaxialgetriebes 1 konzentrischen Rings angeordnet. Die Fig. 2 zeigt eine Ansicht der den Zähnen des Koaxialgetriebes zugewandten Seite der Lagersegmente 17. Die Lagersegmente 17 umfassen jeweils eine Zahnbucht 19 und einen Steg 21. Die Zahnbucht 19 ist in der Form einer Schale ausgeführt, die in Richtung der Zähne des Koaxialgetriebes geöffnet und zur Aufnahme der Zähne eingerichtet ist. Die Zahnbuchten 19 sind jeweils in Umfangsrichtung mit einem ersten Schwenkradius ausgerundet. Die Zahnbuchten 19 und die Stege 21 weisen eine zumindest im Wesentlichen konstante Wandstärke auf.

Die Fig. 3 zeigt eine Ansicht der der Profilierung der Kurvenscheibe zugewandten Seite der Lagersegmente 17. Die Zahnbuchten 19 der Lagersegmente 17 weisen jeweils an der der Profilierung zugewandten Seite eine Gleitlagerfläche 23 auf. Typischerweise liegen die Gleitlagerflächen 23 auf einer Profilierungsgleitfläche der Profilierung auf. Die Gleitlagerflächen 23 sind jeweils lokal, d. h. an jener Stelle der Profilierungsgleitfläche, an welcher eine Gleitlagerfläche 23 auf der Profilierungsgleitfläche der Profilierung aufliegt, zumindest im Wesentlichen parallel zu der Profilierungsgleitfläche der Profilierung ausgerichtet. Zwischen den Gleitlagerflächen 23 zweier benachbarter Lagersegmente 17 weisen die zwei Lagersegmente 17 eine Schmiernut 39 auf. Die Schmiernut 39 erstreckt sich in radialer Richtung entlang der Lagersegmente 17. Eine Gleitlagerfläche 23 wird von zwei Nutflächen 41 flankiert, wobei die Nutflächen 41 zu der Profilierungsgleitfläche der Profilierung geneigt oder verrundet sind. In der Fig. 3 wird die Schmiernut 39 axial in Richtung der Zähne durch den Steg 21 begrenzt.

Die Fig. 4 zeigt eine Schnittansicht einer ringförmig angeordneten Mehrzahl an Lagersegmenten 17. Die Lagersegmente 17 umfassen jeweils eine Zahnbucht 19 und einen Clip 27. Der Clip 27 ist elastisch ausgeführt, so dass sich der Clip 27 während des Einsteckens eines Zahns in die Zahnbucht elastisch verformen kann. Der Clip 27 ist eingerichtet, in Einkerbungen (Fig. 6A-C) eines in die Zahnbucht 19 eingesteckten Zahns einzugreifen und in den Einkerbungen zu verrasten.

Die Fig. 5 zeigt eine Mehrzahl an Lagersegmenten 17, die in zwei Reihen entlang zweier konzentrischer Ringe um die Drehachse 3 eines Koaxialgetriebes angeordnet sind. Erste Lagersegmente 47 der Lagersegmente 17 sind entlang eines ersten Rings 43 der zwei konzentrischen Ringe angeordnet. Zweite Lagersegmente 49 der Lagersegmente 17 sind entlang eines zweiten Rings 45 der zwei konzentrischen Ringe angeordnet. Der erste Ring 43 weist einen geringeren Ringdurchmesser auf als der zweite Ring 45. Die ersten Lagersegmente 47 weisen jeweils eine kleinere Zahnbucht 19 auf als die zweiten Lagersegmente 49. Insbesondere sind die ersten Lagersegmente 47 zur Lagerung erster Zähne und die zweiten Lagersegmente 49 zur Lagerung zweiter Zähne eingerichtet, wobei die ersten Zähne einen geringeren Durchmesser als die zweiten Zähne aufweisen. In dem Ausführungsbeispiel der Fig. 5 sind die ersten Lagersegmente 47 in Umfangsrichtung relativ zu den zweiten Lagersegmenten 49 beweglich.

Die Figuren 6A bis 6C zeigen schematische Ansichten eines Zahns 11 eines typischen Koaxialgetriebes in einer beispielhaften Ausführungsform und werden im Folgenden gemeinsam beschrieben. Dabei zeigt Fig. 6B eine Seitenansicht auf das Zahnprofil des Zahns 11 und die Fig. 6C eine Seitenansicht senkrecht zur Ansichtsebene der Fig. 6B. Der Zahn 11 umfasst einen Zahnkopf 50 mit Zahnflanken 51, die zum Eingriff mit einer Verzahnung des Koaxialgetriebes eingerichtet sind.

Der Zahn 11 umfasst einen Zahnrumpf 53, der zur Aufnahme in eine Führung eines Zahnträgers vorgesehen ist. Der Zahnrumpf 53 weist einen zumindest im Wesentlichen gleichbleibenden Durchmesser im Querschnitt zu der Längsachse 13 des Zahns 11 und einen kreisrunden Querschnitt auf. Das Ausführungsbeispiel der Figuren 6A-C weist am Übergang zwischen dem Zahnkopf 50 und dem Zahnrumpf 53 eine von dem Zahnrumpf 53 in Richtung der Längsachse 13 nach innen zurückspringende Schulter 61 auf.

Typischerweise steht zumindest ein Teil einer Zahnbasis 55 des Zahns 11 aus der Führung des Zahnträgers hervor. Die Zahnbasis 55 des Zahns 11 umfasst in den Figuren 6A-C zwei Einkerbungen 57. Die Einkerbungen 57 sind dazu eingerichtet, den Zahn 11 über einen Rastmechanismus mit einem Lagersegment des Koaxialgetriebes zu verbinden, insbesondere über eine formschlüssige oder kraftschlüssige Verbindung mit einem Clip des Lagersegments. Die Zahnbasis 55 weist eine Zahnbasisauswölbung 59 auf. Die Zahnbasiswölbung 59 ist in den Figuren 6A-C als halbzylindrische Auswölbung in Richtung der Längsachse 13 ausgeführt. Die Zahnbasisauswölbung 59 ist mit einem zweiten Schwenkradius ausgeführt. Die Zahnbasiswölbung 59 ist zur Aufnahme in einer Zahnbucht eines Lagersegments eingerichtet, wobei die Zahnbucht mit einem ersten Schwenkradius ausgerundet ist, welcher zumindest im Wesentlichen dem zweiten Schwenkradius der Zahnbasisauswölbung 59 entspricht.

Die Zahnbasis 55 ist gegenüber dem Zahnrumpf 53 verjüngt ausgebildet. Der Übergangsbereich zwischen der Zahnbasis 55 und dem Zahnrumpf 53 ist leicht gegenüber einer Längsachse 13 des Zahns 11 geneigt. Die Kanten zwischen der Zahnbasis 55 und dem Zahnrumpf 53 sind verrundet. Der Zahn 1 liegt somit nur im Bereich des Zahnrumpfs 53 in einer Führung des Zahnträgers an. Durch die Verjüngung des Zahns 11 vom Zahnrumpf 53 zur Zahnbasis 55 kann beispielsweise Schmiermittel in die Führung gezogen werden und somit der Zahn gegenüber der Führung geschmiert werden.

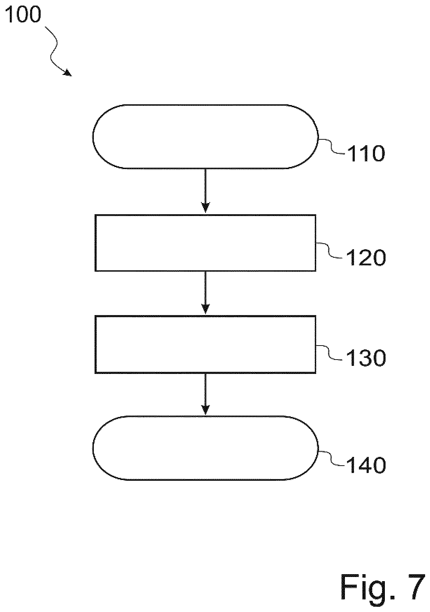

Die Fig. 7 zeigt schematisch ein typisches Verfahren 100 zur Herstellung eines Koaxialgetriebes. Bei 110 werden Zähne jeweils in ein Lagersegment eingesetzt, wobei die Zähne mit dem jeweiligen Lagersegment verrasten. Die Lagersegmente sind zu einem Ring verbunden. Bei 120 wird ein Zahnträger des Koaxialgetriebes in axialer Richtung an eine Verzahnung des Koaxialgetriebes herangeschoben, insbesondere in ein Gehäuse des Koaxialgetriebes an die Verzahnung herangeschoben. Bei 130 werden die Lagersegmente mit den Zähnen in den Zahnträger geschoben. Die mit den Lagersegmenten verrasteten Zähne werden in axialer Richtung in Führungen des Zahnträgers eingeschoben. Bei 140 wird eine Kurvenscheibe mit einer Profilierung an die Lagersegmente geschoben. Insbesondere kommen Gleitlagerflächen der Lagersegmente mit einer Profilierungsgleitfläche der Profilierung in Kontakt. Dadurch wird beispielsweise eine Gleitlagerung der Lagersegmente und der Zähne in Umfangsrichtung an der Kurvenscheibe bereitgestellt.

## Patentansprüche

1. Koaxialgetriebe (1), mit
- einer bezüglich einer Drehachse (3) des Koaxialgetriebes (1) axial ausgerichteten Verzahnung (5),
- einem Zahnträger (7) mit axial ausgerichteten Führungen (9),
- Zähnen (11), welche in den Führungen (9) zum Eingriff mit der Verzahnung (5) aufgenommen sind, wobei die Zähne (11) in den Führungen (9) mit ihren jeweiligen Längsachsen (13) axial ausgerichtet und in den Führungen (9) axial verschieblich gelagert sind, und
- einer um die Drehachse (3) rotierbaren Kurvenscheibe (15) zum axialen Antrieb der Zähne (11),
wobei zwischen der Kurvenscheibe (15) und den Zähnen (11) eine Mehrzahl an Lagersegmenten (17) zur Lagerung der Zähne (11) angeordnet ist.

2. Koaxialgetriebe (1) nach Anspruch 1, wobei jeder der Zähne (11) jeweils auf einem der Lagersegmente (17) gelagert ist.

3. Koaxialgetriebe (1) nach einem der vorhergehenden Ansprüche, wobei mindestens zwei der Lagersegmente (17) miteinander verbunden, insbesondere einstückig hergestellt, sind.

4. Koaxialgetriebe (1) nach einem der vorhergehenden Ansprüche, wobei die Lagersegmente (17) jeweils eine Zahnbucht (19) aufweisen zur Aufnahme des jeweiligen auf dem Lagersegment (17) gelagerten Zahnes (11).

5. Koaxialgetriebe (1) nach einem der vorhergehenden Ansprüche, wobei die Lagersegmente (17) Stege (21) umfassen, wobei die Stege (21) jeweils ein erstes der Lagersegmente (17) mit einem benachbarten der Lagersegmente (17) verbinden.

6. Koaxialgetriebe (1) nach einem der vorhergehenden Ansprüche, wobei die Zähne (11) mit den Lagersegmenten (17) jeweils über einen Rastmechanismus verbunden sind.

7. Koaxialgetriebe (1) nach einem der vorhergehenden Ansprüche, wobei die Zähne (11) jeweils mindestens eine Einkerbung (57) aufweisen, und wobei die Lagersegmente (17) jeweils einen Clip (27) umfassen, welcher zum Formschluss mit der mindestens einen Einkerbung (57) des Zahns (11) ausgebildet ist.

8. Koaxialgetriebe (1) nach einem der vorhergehenden Ansprüche, wobei die Lagersegmente (17) eine Gleitlagerfläche (23) zur Gleitlagerung der Lagersegmente (17) auf der Kurvenscheibe (15) aufweisen.

9. Koaxialgetriebe (1) nach einem der vorhergehenden Ansprüche, wobei die Lagersegmente (17) aus Kunststoff hergestellt sind.

10. Koaxialgetriebe (1) nach einem der vorhergehenden Ansprüche, wobei die Lagersegmente (17) jeweils eine zumindest im Wesentlichen konstante Wandstärke aufweisen.

11. Koaxialgetriebe (1) nach einem der vorhergehenden Ansprüche, wobei zwischen zwei Lagersegmenten (17) an der der Kurvenscheibe (15) zugewandten Seite eine Schmiernut (39) ausgebildet ist.

12. Koaxialgetriebe (1) nach einem der vorhergehenden Ansprüche, wobei die Führungen (9) mit den darin angeordneten Zähnen (11) entlang mindestens zweier konzentrischer Ringe angeordnet sind.

13. Koaxialgetriebe (1) nach Anspruch 12, wobei die Lagersegmente (17) entlang der oder axial versetzt zu den mindestens zwei konzentrischen Ringen angeordnet sind.

14. Verfahren zur Herstellung eines Koaxialgetriebes nach einem der vorhergehenden Ansprüche, wobei die Zähne in den Lagersegmenten eingesetzt werden bevor die Zähne in die Führungen eingeschoben werden.
